# EUROPÄISCHE PATENTANMELDUNG

(11) **EP 0 994 005 A2**
(43) Veröffentlichungstag der Anmeldung: **19.04.2000**
(21) Anmeldenummer: 99116898.0
(22) Anmeldetag: 07.09.1999
(51) Int. Cl.: B62D 25/08, B62D 29/00

(54) **Längsträgerverbindung**

(30) Priorität: 16.10.1998 DE 19847866
(71) Anmelder: Volkswagen Aktiengesellschaft, 38436 Wolfsburg (DE)
(72) Erfinder: Kutz, Dietmar, Dipl.-Ing., 38102 Braunschweig (DE); Poschmann, Michael, Dipl.-Ing., 38165 Lehre (DE)

(57) **Zusammenfassung**

Längsträgerverbindung zwischen einem vorderen, als Deformationselement ausgebildeten Längsträger (1) und einem hinteren Längsträger (2) umfassend ein diese verbindendes Knotenelement (3), das zumindest teilweise in zumindest einen der Längsträger (1, 2) einschiebbar ist, wobei das Knotenelement (3) einen vorderen und einen hinteren Abschnitt (4, 6) umfaßt, die in den vorderen bzw. hinteren Längsträger (1, 2) zumindest teilweise einschiebbar sind. Vorzugsweise ist das Knotenelement (3) als Leichtmetallgußteil ausgeführt und besteht insbesondere aus Magnesium oder einer Magnesiumlegierung.

## Beschreibung

Die vorliegende Erfindung betrifft eine Längsträgerverbindung, insbesondere eine Längsträgerverbindung zwischen einem vorderen als Deformationselement ausgebildeten Längsträger (1) und einem hinteren Längsträger (2) umfassend ein diese verbindendes Knotenelement (3), das zumindest teilweise in zumindest einen der Längsträger (1, 2) einschiebbar ist.

Eine Längsträgerverbindung der vorgenannten Art ist aus der europäischen Offenlegungsschrift EP 0 318 769 A2 bekannt. Bei der darin beschriebenen Längsträgerverbindung ist der als Deformationselement ausgestaltete Längsträger als Aluminiumstrangpreßprofil ausgeführt. Ein aus Aluminiumguß bestehendes Knotenelement ist teilweise in den vorderen Längsträger eingeschoben und überlappt teilweise den hinteren Längsträger, der aus Stahlblech gefertigt ist. Die Verbindung des hinteren Längsträgers mit dem Knotenelement erfolgt über eine relativ aufwendige Schraubverbindung. Aufgrund der Verwendung dieser Schraubverbindung weist das Knotenelement einen relativ komplizierten Aufbau auf, wobei es aus diesem Grund auch relativ schwer ist. Das Gewicht der Längsträgerverbindung wird zusätzlich dazu durch die Wahl der Materialien der Längsträger weiter erhöht.

Aus der deutschen Offenlegungsschrift DE 41 39 329 A1 ist eine Längsträgerverbindung bekannt, bei der als Knotenelement zwei miteinander verschweißte oder verklebte Halbschellen aus einem Leichtmetallguß verwendet werden. Durch die Verwendung zweier miteinander und mit den Längsträgern zu verbindenen Halbschelten erweist sich die in der genannten Offenlegungsschrift beschriebene Längsträgerverbindung als relativ aufwendig. Der vordere Längsträger ist als Aluminiumrohr ausgeführt, wohingegen der hintere Längsträger ein stranggepreßtes Aluminiumhohlprofil ist. Diese beiden Längsträger stoßen mit ihren einander zugewandten Stirnseiten aneinander an. Die beispielsweise bei einem Frontalaufprall auf den vorderen Längsträger ausgeübte Kraft wird nicht über das Knotenelement, sondern durch die Anlage der beiden Längsträger aneinander auf den zweiten Längsträger übertragen. Die Crash-Kräfte-Überleitung ist bei dieser Längsträgerverbindung aus dem Stand der Technik daher nicht optimal gewährleistet.

Das der vorliegenden Erfindung zugrundeliegende Problem ist die Schaffung einer Längsträgerverbindung der eingangs genannten Art, die bei einem einfachen und möglichst leichten Aufbau eine saubere Kräfteeinleitung gewährleistet.

Dies wird erfindungsgemäß dadurch erreicht, daß das Knotenelement einen vorderen und einen hinteren Abschnitt umfaßt, die in den vorderen bzw. hinteren Längsträger zumindest teilweise einschiebbar sind. Dadurch wird das Knotenelement unmittelbar an der Kräfteeinleitung beteiligt, so daß eine saubere geometrische und Crash-Kräfte-Überleitung gewährleistet wird. Weiterhin kann dadurch auf aufwendige Verbindungen wie beispielsweise Schraubverbindungen verzichtet werden, so daß der Aufbau der erfindungsgemäßen Längsträgerverbindung einfach ist und das Gewicht der Längsträgerverbindung nicht durch zusätzliche Verbindungsmittel erhöht wird.

Gemäß einer bevorzugten Ausführungsform der vorliegenden Erfindung ist das Knotenelement als Leichtmetallgußteil ausgeführt und besteht insbesondere aus Magnesium oder einer Magnesiumlegierung. Hierbei kann vorzugsweise der vordere als Deformationselement ausgeführte Längsträger aus kohlenstoffaserverstärktem Kunststoff bestehen und beispielsweise rohrförmig gestaltet sein. Weiterhin kann vorteilhafterweise der hintere Längsträger aus Aluminium oder einer Aluminiumlegierung und beispielsweise als im wesentliches hohles Strangpreßprofil ausgeführt sein, daß einen im wesentlichen rechteckigen Querschnitt aufweisen kann. Durch die Wahl der vorgenannten Materialien ergibt sich eine wesentlich leichtere Längsträgerverbindung im Vergleich zu den aus dem Stand der Technik bekannten Längsträgerverbindungen. Weiterhin wird durch die rohrförmige Ausgestaltung des vorderen Längsträgers bzw. durch die Ausgestaltung des hinteren Längsträgers als Strangpreßprofil gewährleistet, daß beispielsweise bei einem Frontalaufprall zuerst der vordere Längsträger deformiert wird, so daß bei geringer Aufprallenergie der hintere Längsträger unverformt bleibt.

Gemäß einer bevorzugten Ausführungsform der vorliegenden Erfindung liegen die in den vorderen Längsträger bzw. den hinteren Längsträger einschiebbaren Abschnitte des Knotenelements mit ihren Außenwandungen zumindest teilweise an den Innenwandungen des vorderen bzw. hinteren Längsträgers an, wobei die aneinanderliegenden Wandungen vorzugsweise verklebt und/oder vernietet sind. Das Verkleben oder Vernieten der aneinanderanliegenden Wandungen stellt eine einfach herzustellende und leichte Verbindung zwischen den Längsträgern und dem Knotenelement dar. Weiterhin ergibt sich eine stabile formschlüssige Verbindung zwischen den Längsträgern und dem Knotenelement.

Es kann vorgesehen sein, daß der hintere Längsträger zumindest in einer der Richtungen senkrecht zur Längsrichtung einen größeren Durchmesser aufweist als der vordere Längsträger, so daß sich ein zwischen den beiden Längsträgern erstreckender Abschnitt des Knotenelements zumindest teilweise konisch von dem vorderen Längsträger zu dem hinteren Längsträger erstreckt. Durch die Wahl eines geringeren Querschnitts für den vorderen Längsträger wird gewährleistet, daß bei geringen Aufprallenergien im wesentlichen nur der vordere und nicht der hintere Längsträger deformiert wird. Weiterhin wird gleichzeitig durch die entsprechend teilweise konische Formgebung des mittleren Knotenelementabschnitts erreicht, daß trotzdem eine gute Krafteinleitung in den hinteren Längsträger erfolgt.

Vorteilhafterweise weist das Knotenelement einen zumindest teilweise umlaufenden Anschlag auf, an dem eine dem Knotenelement zugewandte Stirnfläche des vorderen Längsträgers zumindest teilweise anliegt. Durch den Anschlag wird die Krafteinleitung von dem vorderen Längsträger in das Knotenelement weiter verbessert.

Vorzugsweise kann das Knotenelement auch auf seiner dem hinteren Längsträger zugewandten Seite einen Anschlag aufweisen, an dem dessen dem Knotenelement zugewande Stirnfläche zumindest teilweise anliegt. Hierdurch wird die Krafteinleitung von dem Knotenelement in den hinteren Längsträger weiter verbessert.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: einen Längsschnitt durch eine erfindungsgemäße Längsträgerverbindung;
- Fig. 2: eine Ansicht gemäß dem Pfeil II in Fig. 1.

Eine erfindungsgemäße Längsträgerverbindung kann beispielsweise eine Verbindung zwischen einem in Fahrtrichtung vorderen Längsträger 1 und einem in Fahrtrichtung hinteren Längsträger 2 sein. In dem abgebildeten Ausführungsbeispiel ist der Längsträger 1 ein rohrförmiges Deformationselement, das vorzugsweise aus einem kohlenstoffaserverstärkten Kunststoff hergestellt ist. Der Längsträger 2 ist in dem abgebildeten Ausführungsbeispiel ein Strangpreßprofil aus Aluminium mit im Verbindungsbereich im wesentlichen rechteckigem Querschnitt.

Die erfindungsgemäße Längsträgerverbindung umfaßt weiterhin ein Knotenelement 3, das beispielsweise als Gußteil aus Magnesium oder einer Magnesiumlegierung ausgeführt ist. Dieses Knotenelement 3 weist einen in den Längsträger 1 hineinreichenden Abschnitt 4 auf, der im wesentlichen die Form eines Rohrstutzens hat. Der Abschnitt liegt mit seiner Außenwand an der Innenwand des Längsträgers 1 an und ist mit dieser verklebt und/oder vernietet. An den in den Längsträger 1 hineinreichenden Abschnitt 4 schließt sich in Richtung auf den Längsträger 2 ein sich zumindest teilweise konisch erweitender Abschnitt 5 an, da in dem abgebildeten Ausführungsbeispiel der Querschnitt des Längsträgers 2 zumindest in der Richtung nach oben größer als der Querschnitt des rohrförmigen Längsträgers 1 ist. An den sich zumindest teilweise erweiternden Abschnitt 5 schließt sich ein in den Längsträger 2 hineinreichender Abschnitt 6 an, dessen Außenwandung ebenfalls an der Innenwandung des Längsträgers 2 über eine gewisse geeignete Länge anliegt. Die aneinander anliegenden Wandungen des Abschnitts 6 und des Längsträgers 2 sind miteinander verklebt und/oder vernietet. Der Abschnitt 6 ist ebenso wie der Abschnitt 5 und der Abschnitt 4 des Knotenelements 3 im wesentlichen hohl, um dessen Gewicht möglichst gering zu halten.

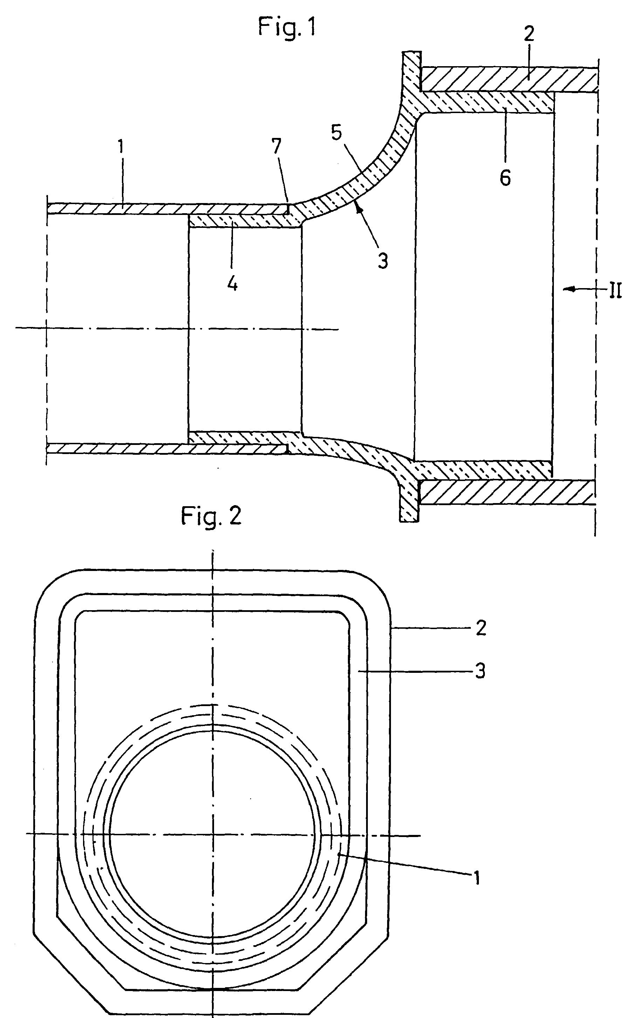

Im Bereich des Übergangs vom sich zum Längsträger 2 hin zumindest teilweise erweiternden Abschnitt 5 zum in den Längsträger 1 hineinreichenden Abschnitt 4 weist das Knotenelement 3 einen Anschlag 7 auf, an dem die Stirnseite des Längsträgers 2 zumindest teilweise anliegt. Der Anschlag 7 kann aber auch als umlaufender Anschlag ausgebildet sein, so daß die gesamte dem Abschnitt 5 zugewandte Stirnseite des Längsträgers 1 an dem Anschlag 7 anliegt. Ebenso kann das Knotenelement 3 auf seiner dem Längsträger 2 zugewandten Seite einen Anschlag (siehe Fig. 1) aufweisen, an dem die Stirnseite des Längsträgers 2 anliegt.

Die erfindungsgemäße Längsträgerverbindung ist zum einen aufgrund der Verwendung einer Magnesiumlegierung für das Knotenelement 3 ausgesprochen leicht und sorgt weiterhin für eine saubere geometrische und Crash-Kräfte-Überleitung von dem als Deformationselement ausgebildeten Längsträger 1 auf den Längsträger 2.

### BEZUGSZEICHENLISTE

- 1.: Längsträger, CFK-Deformationselement
- 2.: Längsträger, Alustrangpreßprofil
- 3.: Knotenelement
- 4.: in 1 hineinreichender Abschnitt von 3
- 5.: sich teilweise konisch erweiternder Abschnitt von 3
- 6.: in 2 hineinreichender Abschnitt von 3
- 7.: Anschlag

## Patentansprüche

1. Längsträgerverbindung zwischen einem vorderen, als Deformationselement ausgebildeten Längsträger (1) und einem hinteren Längsträger (2) umfassend ein diese verbindendes Knotenelement (3), das zumindest teilweise in zumindest einen der Längsträger (1, 2) einschiebbar ist, **dadurch gekennzeichnet,** daß das Knotenelement (3) einen vorderen und einen hinteren Abschnitt (4, 6) umfaßt, die in den vorderen bzw. hinteren Längsträger (1, 2) zumindest teilweise einschiebbar sind.

2. Längsträgerverbindung nach Anspruch 1, dadurch gekennzeichnet, daß das Knotenelement (3) als Leichtmetallgußteil ausgeführt ist und insbesondere aus Magnesium oder einer Magnesiumlegierung besteht.

3. Längsträgerverbindung nach einem der Ansprüche 1 oder 2, dadurch gekennzeichnet, daß der vordere, als Deformationselement ausgeführte Längsträger (1) aus kohlenstoffaserverstärktem Kunststoff besteht und vorzugsweise rohrförmig gestaltet ist.

4. Längsträgerverbindung nach einem der Ansprüche 1 bis 3, dadurch gekennzeichnet, daß der hintere Längsträger (2) aus Aluminium oder einer Aluminiumlegierung besteht und vorzugsweise als im wesentlichen hohles Strangpreßprofil ausgeführt ist, das vorzugsweise einen im wesentlichen rechteckigen Querschnitt aufweist.

5. Längsträgerverbindung nach einem der Ansprüche 1 bis 4, dadurch gekennzeichnet, daß der in den vorderen Längsträger (1) einschiebbare Abschnitt (4) mit seiner Außenwand zumindest teilweise an der Innenwand des vorderen Längsträgers (1) anliegt, wobei die aneinander anliegenden Wandungen vorzugsweise verklebt und/oder vernietet sind.

6. Längsträgerverbindung nach einem der Ansprüche 1 bis 5, dadurch gekennzeichnet, daß der in den hinteren Längsträger (2) einschiebbare Abschnitt (6) mit seiner Außenwand zumindest teilweise an der Innenwand des hinteren Längsträgers (2) anliegt, wobei die aneinander anliegenden Wandung vorzugsweise verklebt und/oder vernietet sind.

7. Längsträgerverbindung nach einem der Ansprüche 1 bis 6, dadurch gekennzeichnet, daß das Knotenelement (3) einen sich zwischen den beiden Längsträgern (1, 2) erstreckenden Abschnitt (5) umfaßt, der die beiden einsteckbaren Abschnitte (4, 6) miteinander verbindet.

8. Längsträgerverbindung nach Anspruch 7, dadurch gekennzeichnet, daß der hintere Längsträger (2) zumindest in einer der Richtungen senkrecht zur Längsrichtung einen größeren Durchmesser aufweist als der vordere Längsträger (1), wobei der sich zwischen den beiden Längsträgern (1, 2) erstreckende Abschnitt (5) des Knotenelements (3) sich zumindest teilweise konisch von dem vorderen Längsträger (1) zu dem hinteren Längsträger (2) erweitert.

9. Längsträgerverbindung nach einem der Ansprüche 1 bis 8, dadurch gekennzeichnet, daß das Knotenelement (3) einen zumindest teilweise umlaufenden Anschlag (7) aufweist, an dem eine dem Knotenelement (3) zugewandte Stirnfläche des vorderen Längsträgers (1) zumindest teilweise anliegt.

10. Längsträgerverbindung nach einem der Ansprüche 1 bis 9, dadurch gekennzeichnet, daß das Knotenelement (3) auf seiner dem hinteren Längsträger (2) zugewandten Seite einen Anschlag aufweist, an dem die dem Knotenelement (3) zugewandte Stirnseite des Längsträgers (2) zumindest teilweise anliegt.
